# EUROPÄISCHE PATENTSCHRIFT

(11) **EP 2 708 149 B1**
(45) Veröffentlichungstag und Bekanntmachung des Hinweises auf die Patenterteilung: **01.02.2017**
(21) Anmeldenummer: 13179794.6
(22) Anmeldetag: 08.08.2013
(51) Int. Cl.: A24C 5/32, H02K 9/14

(54) **Rotationsfördervorrichtung zum Fördern von Artikeln der Tabak verarbeitenden Industrie**
Rotating conveyor for conveying rod-shaped articles from the tobacco processing industry
Dispositif de transport rotatif pour le transport d'articles de l'industrie de traitement du tabac

(30) Priorität: 18.09.2012 DE 102012018370
(43) Veröffentlichungstag der Anmeldung: 19.03.2014
(73) Patentinhaber: Hauni Maschinenbau GmbH, 21033 Hamburg (DE)
(72) Erfinder: Meins, Thomas, 23898 Labenz (DE); Brinkmann, Bernhard, 21039 Börnsen (DE); Jonat, Ilmar, 22159 Hamburg (DE); Kosorog, Roman, 92439 Bodenwöhr (DE); Meinke, Karsten, 23879 Mölln (DE); Schnabel, Wolfgang, 22113 Oststeinbek (DE); Wieczorek, Dennis, 21039 Börnsen (DE)
(74) Vertreter: Eisenführ Speiser

(56) Entgegenhaltungen:
- EP-A1- 1 637 044
- EP-A1- 2 382 880
- DE-A1- 4 238 564

## Beschreibung

Die Erfindung betrifft eine Rotationsfördervorrichtung zum Fördern von Artikeln der Tabak verarbeitenden Industrie, mit einem stationären Körper, der an seiner Außenseite mit mindestens einer mit Unterdruck beaufschlagbaren und an eine Saugvorrichtung anschließbaren Aussparung versehen ist, und einem am stationären Körper um eine Rotationsachse drehbar gelagerten Trommelkörper, der mit seiner Innenseite die Außenseite des stationären Körpers umgibt und an seiner Außenseite mit mehreren in Rotationsrichtung hintereinanderliegenden Aufnahmeabschnitten zur temporären Aufnahme der Artikel versehen ist, wobei der Trommelkörper von seiner Außenseite durch die Aufnahmeabschnitte zu seiner Innenseite führende Durchlässe aufweist, die während der Rotation des Trommelkörpers zumindest temporär in Fluidverbindung mit der mindestens einen Aussparung an der Außenseite des stationären Körpers bringbar sind, und einem Antriebsmotor, dessen Rotor mit dem Trommelkörper für dessen rotatorischen Antrieb drehfest und/oder drehsteif gekoppelt ist, wobei zur Belüftung des Antriebsmotors Lüftungsmittel vorgesehen sind, die sich in Fluidverbindung mit der mindestens einen Aussparung an der Außenseite des stationären Körpers befinden.

Eine solche Rotationsfördervorrichtung ist beispielsweise aus der EP 1 637 044 A1 bekannt, die den nächstkommenden Stand der Technik bildet, von dem die vorliegende Erfindung ausgeht.

Artikel der Tabak verarbeitenden Industrie können beispielsweise stabförmige Gegenstände wie Tabakstäbe und -stöcke mit begrenzter Länge, Filterstäbe oder Zigaretten mit und ohne Filter oder auch Zigarillos u. dgl. sein.

Bei der Rotationsfördervorrichtung der eingangs genannten Art findet der Transport der Artikel der Tabak verarbeitenden Industrie mithilfe des rotierenden Trommelkörpers statt, indem dessen Rotationsrichtung der Förder- bzw. Transportrichtung entspricht. Deshalb wird vielfach die Rotationsfördervorrichtung auch vereinfacht als "Trommel" bezeichnet. Für den Transport werden die Artikel von den in Rotationsrichtung hintereinanderliegenden Aufnahmeabschnitten an der Außenseite des Trommelkörpers während dessen Rotation temporär aufgenommen. Der Trommelkörper ist um eine Rotationsachse drehbar am stationären Körper gelagert, der vielfach auch als "Lagerflansch", "Steuerflansch" oder einfach nur als "Flansch" bezeichnet wird. Dabei umschließt der Trommelkörper den stationären Körper, sodass sich der Trommelkörper außen um den stationären Körper herum bewegt. Für den rotatorischen Antrieb des Trommelkörpers ist ein Antriebsmotor vorgesehen, der am stationären Körper montiert ist.

Die vom Trommelkörper umgebene Außenseite des stationären Körpers ist mit mindestens einer mit Unterdruck beaufschlagbaren Aussparung versehen, die an eine Saugvorrichtung angeschlossen ist. Den Trommelkörper durchsetzen mehrere Durchlässe, die von den Aufnahmeabschnitten an der Außenseite zur Innenseite des Trommelkörpers führen und dort in entsprechende Öffnungen münden. Mithilfe dieser Durchlässe gelangen während der Rotation des Trommelkörpers die Aufnahmeabschnitte zumindest temporär in Fluidverbindung mit der mindestens einen Aussparung an der Außenseite des stationären Körpers, da die Innenseite des Trommelkörpers, an der die Durchlässe enden, der Außenseite des stationären Körpers gegenüberliegen. Dadurch, dass die Saugvorrichtung die mindestens eine Aussparung an der Außenseite des stationären Körpers mit Unterdruck beaufschlagt, führt die erwähnte Fluidverbindung dazu, dass auch in den Aufnahmeabschnitten an der Außenseite des Trommelkörpers ein Unterdruck entsteht. Aufgrund dieses Unterdrucks werden die zu fördernden Artikel an der Außenseite des Trommelkörpers in die dort vorhandenen Aufnahmeabschnitte gesogen und vom Trommelkörper während dessen Rotation mitgenommen. Dabei sorgt der Unterdruck dafür, dass die Artikel in den Aufnahmeabschnitten während der Rotation des Trommelkörpers sicher gehalten werden.

Rotationsfördervorrichtungen der eingangs genannten Art zum Fördern von Artikeln der Tabak verarbeitenden Industrie sind bekannt. Beispielsweise offenbart die EP 1 495 685 B1 eine Vorrichtung, bei der mindestens eine Trommel durch ein separates, zusätzliches Antriebsmittel antreibbar ist, das zusammen mit einer aus Trommel sowie Lager- und Steuerflansch gebildeten Trommeleinheit eine Antriebseinheit bildet. Dadurch werden die Anforderungen bezüglich Bauform, Handhabung und Wirtschaftlichkeit erfüllt, indem Antriebsmittel und Trommeleinheit einerseits getrennt voneinander, jedoch andererseits dennoch zur Einheit zusammengefügt ausgebildet sind.

Die DE 10 2010 018 817 A1 beschreibt eine Transportvorrichtung mit einem an einer Modulplatte einer Maschine befestigbaren feststehenden Lagerflansch, einer durch eine Antriebseinrichtung rotatorisch antreibbaren Trommel mit einer Vielzahl von an dem Außenumfang der Trommel angeordneten Aufnahmen zur Aufnahme der Artikel und einem am Lagerflansch angeordneten feststehenden Steuerring. Der Steuerring und der Lagerflansch weisen ein Druckluftsystem mit mehreren strömungstechnisch in Verbindung stehenden Druckluftbohrungen auf, welche mit in den Aufnahmen vorgesehenen Bohrungen verbindbar sind. Dabei weist der Lagerflansch wenigstens zwei Druckluftbohrungen gleicher Funktion auf, von denen über die eine Druckluftbohrung die Bohrungen in den Aufnahmen mit Druckluft beaufschlagt werden, während die andere Druckluftbohrung gleicher Funktion als Blindleitung verwendet wird.

Es ist eine Aufgabe der vorliegenden Erfindung, für eine Rotationsfördervorrichtung der eingangs genannten Art eine verbesserte Lösung hinsichtlich der Saugluftströmung zur Erzeugung des Unterdruckes in den Aufnahmeabschnitten an der Außenseite des Trommelkörpers unter gleichzeitiger Erzielung einer kompakten Bauform vorzuschlagen.

Gelöst wird diese Aufgabe mit einer Rotationsfördervorrichtung zum Fördern von Artikeln der Tabak verarbeitenden Industrie gemäß Anspruch 1.

Mithilfe der Erfindung wird somit die Saugluftströmung, die von der an der mindestens einen Aussparung an der Außenseite des stationären Körpers angeschlossenen Saugvorrichtung zur Bildung eines Unterdruckes in den Aufnahmeabschnitten an der Außenseite des Trommelkörpers erzeugt wird, gleichzeitig auch zur Oberflächenkühlung des Antriebsmotors genutzt. Dies wird erfindungsgemäß dadurch erreicht, dass zur Belüftung des Antriebsmotors Lüftungsmittel vorgesehen sind, die sich in Fluidverbindung mit der mindestens einen Aussparung an der Außenseite des stationären Körpers befinden. Somit findet eine Belüftung des Trommelkörperinnenraumes nicht über eine Öffnung in einem vorderen Trommelflansch statt, sondern werden mithilfe der erfindungsgemäßen Konstruktion eine durch die Durchlässe im Trommelkörper geleitete erste Saugluftströmung zur Erzeugung eines Unterdruckes in den Aufnahmeabschnitten und eine zweite Saugluftströmung zur Kühlung des Antriebsmotors zu einem gemeinsamen Saugluftstrom vereint, der entlang der mindestens einen Aussparung an der Außenseite des stationären Körpers von einer Saugvorrichtung abgeführt wird. Dabei kann im günstigsten Fall die zur Erzeugung eines Unterdruckes an den Aufnahmeabschnitten des Trommelkörpers dienende erste Saugluftströmung dazu genutzt werden, die zur Kühlung des Antriebsmotors dienende zweite Saugluftströmung aufgrund unterschiedlicher Druckniveaus zu erzeugen. Ferner wird mithilfe der erfindungsgemäßen Lösung derjenige Abschnitt des stationären Körpers bzw. Flansches, durch den sich der Rotor des Antriebsmotors zur Kopplung mit dem außen liegenden Trommelkörper erstreckt, von unerwünschten Luftstrom-Leckagen frei gehalten. Dies wiederum verringert die Anfälligkeit der Vorrichtung gegen den Eintritt von Staub- und Schmutzpartikeln.

Da erfindungsgemäß der Antriebsmotor zumindest teilweise in den stationären Körper integriert ist, indem nämlich der stationäre Körper einen Einbauhohlraum zur zumindest teilweisen Aufnahme des Antriebsmotors enthält, lässt sich eine besonders kompakte Bauweise für die gesamte Vorrichtung realisieren. Dabei verbleibt zwischen der Innenwandung des Einbauhohlraumes und der Außenwandung des Antriebsmotors ein Zwischenraum, der zumindest einen Teil der Lüftungsmittel bildet. Somit wird auf geschickte Weise ein in diesem Zwischenraum zwangsläufig auftretendes Kriechvakuum an der Außenfläche bzw. Mantelfläche des Antriebsmotors zur Bildung der zuvor erwähnten zweiten Saugluftströmung genutzt, um die im Antriebsmotor entstehende Wärme abzutransportieren und dadurch den Antriebsmotor zu kühlen.

Demnach lassen sich mit der erfindungsgemäßen Lösung auf geschickte Weise gleichzeitig zwei Effekte erzielen, nämlich zum einen die Bildung eines Unterdruckes in den Aufnahmeabschnitten an der Außenseite des Trommelkörpers und zum anderen eine wirksame Abfuhr der im Antriebsmotor entstehenden Wärme. Dies wiederum lässt bei Bedarf in vorteilhafter Weise eine Reduzierung der Baugröße der Vorrichtung zu, indem für eine Platz sparende Anordnung der stationäre Körper bzw. Lagerflansch, der Trommelkörper und der Antriebsmotor baulich eng aneinander angepasst oder ineinander integriert werden können. Schließlich gestattet die erfindungsgemäße Konstruktion als weiteren Vorteil die Verwendung von handelsüblichen Antriebsmotoren.

Zwar zeigt die EP 1 065 781 A1 eine Muldentrommel mit darin integrierten Motorwicklungen; jedoch bildet in diesem Stand der Technik ein drehbarer Trommelkörper zugleich den Außenrotor eines Elektromotors und wird die Saugluftströmung von den als Aufnahmeabschnitten vorgesehenen Saugmulden des Trommelkörpers nicht mit einer Saugluftströmung zur Kühlung des Motors vereint und gemeinsam abgeführt, sondern durch den innen liegenden Motorstator geleitet. Diese bekannte Anordnung erlaubt jedoch keine Nutzung von Standard- oder gar Normmotoren.

Bevorzugte Ausführungen und Weiterbildungen der Erfindung sind in den abhängigen Ansprüchen angegeben.

Bevorzugt weisen die Lüftungsmittel mindestens einen im stationären Körper ausgebildeten Durchlass auf, der den Einbauhohlraum mit der mindestens einen Aussparung an der Außenseite des stationären Körpers verbindet und deshalb dafür sorgt, dass die für die Kühlung des Antriebsmotors dienende zweite Saugluftströmung aus dem Einbauhohlraum abgezogen wird.

Zur gezielten Schaffung eines Zwischenraumes zwischen der Außenfläche des Antriebsmotors und der Innenwandung des stationären Körpers bei in dessen Einbauhohlraum zumindest teilweise aufgenommenem Antriebsmotor kann bevorzugt an der Innenwandung des Einbauhohlraumes im stationären Körper mindestens eine Aussparung ausgebildet sein, welche sich in Fluidverbindung mit der mindestens einen Aussparung an der Außenseite des stationären Körpers befindet und somit Bestandteil der Lüftungsmittel ist.

Zweckmäßigerweise weist der Einbauhohlraum des stationären Körpers eine Öffnung nach außen bzw. zur Umgebung auf, die bevorzugt zum Einsetzen des Antriebsmotors in den Einbauhohlraum des stationären Körpers ausgebildet ist. Während die zuvor erwähnte erste Saugluftströmung zur Erzeugung eines Unterdruckes durch entsprechende Öffnungen in den Aufnahmeabschnitten an der Außenseite des Trommelkörpers eintritt, gelangt bei dieser Ausführung die zweite Saugluftströmung zur Kühlung des Antriebsmotors durch die Öffnung in den Einbauhohlraum des stationären Körpers und wird von dort durch den zuvor erwähnten, im stationären Körper ausgebildeten Durchlass in die mindestens eine Aussparung an der Außenseite des stationären Körpers geleitet, um dort mit der ersten Saugluftströmung zu einem gemeinsamen Saugluftstrom vereint zu werden, der dann von einer externen Saugluftvorrichtung aus der Vorrichtung abgesogen wird.

Eine Weiterbildung der zuvor beschriebenen Ausführung zeichnet sich dadurch aus, dass der stationäre Körper einen ersten Abschnitt, in dem die Öffnung des Einbauhohlraumes ausgebildet ist und einen vom ersten Abschnitt entfernt gelegenen zweiten Abschnitt aufweist, in dem der Trommelkörper mit dem Rotor des Antriebsmotors koppelbar ist. Dabei kann der erste Abschnitt den einen Endabschnitt des stationären Körpers und der zweite Abschnitt das gegenüberliegende andere Ende des stationären Körpers bilden.

Bei einer weiteren bevorzugten Ausführung enthält der stationäre Körper eine mit dem Einbauhohlraum kommunizierende zusätzliche Öffnung zur Bildung einer drehfesten und zudem drehsteifen Kopplung zwischen der Ausgangswelle des Antriebsmotors und des Trommelkörpers. Dabei sollte diese zusätzliche Öffnung zweckmäßigerweise Dichtmittel zur Abdichtung der drehfesten Kopplung der Ausgangswelle des Antriebsmotors mit dem Trommelkörper aufweisen, um den Einbauhohlraum und den Antriebsmotor vor Eindringen von Schmutz- und Staubpartikeln und somit vor externer Verschmutzung zu schützen und gleichzeitig eine Luftstrom-Leckage zu verhindern. Diese zusätzliche Öffnung ist entweder zur Aufnahme der Ausgangswelle des Antriebsmotors vorgesehen oder enthält ein drehbar gelagertes Kopplungsmittel zur Herstellung einer drehfesten Kopplung zwischen der Ausgangswelle des Antriebsmotors und dem Trommelkörper.

Bei einer weiteren gleichermaßen zusätzlichen oder alternativen Ausführung können die Lüftungsmittel mindestens ein Anschlussmittel aufweisen, das zur Herstellung einer Fluidverbindung mit einer am Antriebsmotor vorgesehenen Entlüftungsöffnung ausgebildet ist.

Zweckmäßigerweise sind die Aufnahmeabschnitte an der Außenseite des Trommelkörpers als sich parallel zur Rotationsachse erstreckende Nuten oder Mulden ausgebildet, wobei eine derart gestaltete Trommel als Muldentrommel bezeichnet wird.

Nachfolgend wird ein bevorzugtes Ausführungsbeispiel der Erfindung anhand der beiliegenden Zeichnungen näher erläutert. Es zeigen:
- Fig. 1: einen Längsschnitt durch eine Trommelanordnung gemäß einem bevorzugten Ausführungsbeispiel der Erfindung;
- Fig. 2: einen Querschnitt durch die Trommelanordnung von Fig. 1 entlang der dort dargestellten Schnittlinie II-II; und
- Fig. 3: eine vergrößerte ausschnittsweise Ansicht eines Abschnittes von Fig. 1 mit einer schematischen Darstellung der dort ausgebildeten Luftströmungswege.

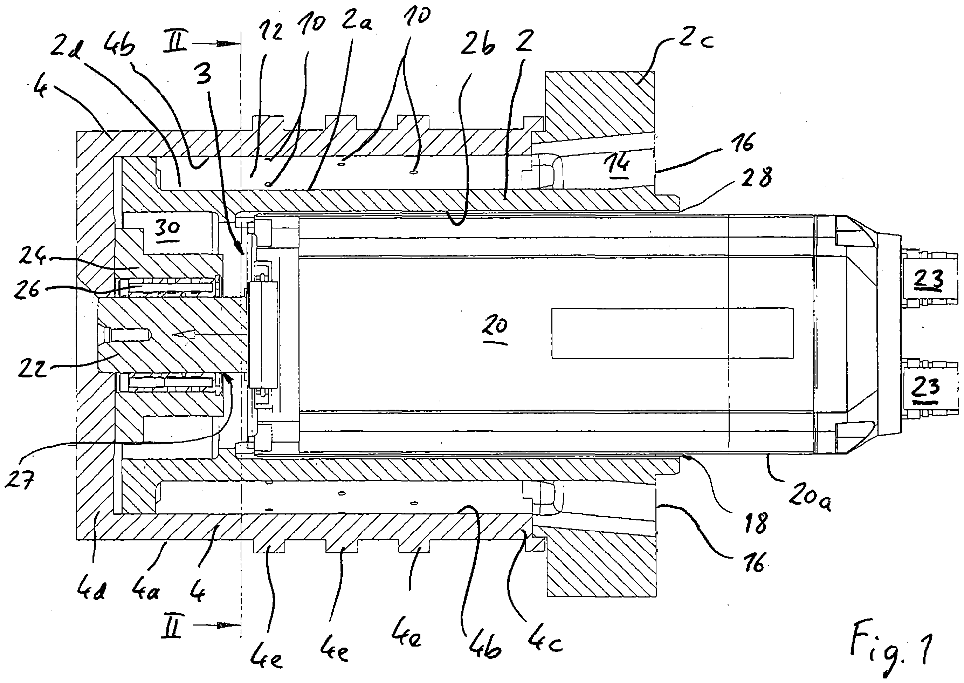

Die in den Figuren beispielhaft dargestellte Trommelanordnung weist einen Lagerflansch 2 auf, der alternativ auch als "Steuerflansch" oder einfach nur als "Flansch" bezeichnet werden kann und als stationärer Körper vorgesehen ist. Der Lagerflansch 2 hat im dargestellten Ausführungsbeispiel einen im Wesentlichen quadratischen Querschnitt mit abgerundeten Seitenrändern und weist demnach eine Außenseite 2a auf, deren Fläche überwiegend die Form eines länglichen Quaders mit an seinen Langseiten abgerundeten Seitenrändern bildet. Der Lagerflansch 2 ist im dargestellten Ausführungsbeispiel ferner als Hohlkörper ausgebildet, indem eine Innenseite oder Innenwandung 2b einen Einbauhohlraum 3 begrenzt. Die Innenwandung 2b verläuft im dargestellten Ausführungsbeispiel im Wesentlichen parallel zur Außenseite 2a, wodurch der Lagerflansch 2 einen zwischen der Außenseite 2a und der Innenwandung 2b gebildeten umlaufenden Wandabschnitt aufweist und der Einbauhohlraum eine eine etwa zur Form der Außenseite 2a komplementäre Form erhält. Wie Fig. 1 ferner erkennen lässt, weist der Lagerflansch 2 einen (gemäß Fig. 1 an dessen rechter Seite vorgesehenen) ersten Endabschnitt 2c und einen gegenüberliegenden (gemäß Fig. 1 an dessen linker Seite vorgesehenen) zweiten Endabschnitt 2d auf. Der erste Endabschnitt 2c des Lagerflansches 2 ist als radial nach außen abstehender flanschartiger Rand ausgebildet, mit dem der Lagerflansch 2 an einem externen Gegenstand wie beispielsweise einem vertikalen Wandelement in einer Herstellungsmaschine für stabförmige Artikel der Tabak verarbeitenden Industrie, beispielsweise einer Filterherstellungsmaschine oder einer Zigarettenherstellungsmaschine, zu befestigen ist. Wie Fig. 1 ferner erkennen lässt, ist der im Lagerflansch 2 ausgebildete und von dessen Innenwandung 2b begrenzte Einbauhohlraum 3 an der (in der Ansicht von Fig. 1 rechten) Seite des ersten Endabschnittes 2c offen und an der (in der Ansicht von Figur 1 linken) Seite des gegenüberliegenden zweiten Endabschnittes 2d im Wesentlichen geschlossen.

Der Lagerflansch 2 dient zur drehbaren Lagerung eines Trommelkörpers 4, der ebenfalls als Rotationskörper ausgebildet ist und eine im Wesentlichen zylindrische Form besitzt. Somit ist die Außenseite 4a des Trommelkörpers 4 im Wesentlichen zylindrisch ausgebildet. Der Trommelkörper 4 ist aber nicht nur als Rotationskörper, sondern gleichzeitig als Hohlkörper ausgebildet und enthält einen Hohlraum, der von einer Innenwandung oder Innenseite 4b begrenzt wird. Zwischen der Außenseite 4a und der Innenseite 4b ist somit ein im Wesentlichen zylindrischer Wandabschnitt des Trommelkörpers 4 gebildet. Wie Fig. 1 ferner erkennen lässt, ist der Hohlraum des Trommelkörpers 4 in einem (gemäß Fig. 1 an der rechten Seite befindlichen) ersten Endabschnitt 4c offen und an einem gegenüberliegenden (gemäß Fig. 1 an der linken Seite befindlichen) zweiten Endabschnitt 4d geschlossen. Wie Fig. 1 ferner erkennen lässt, umgibt der Trommelkörper 4 den Lagerflansch 2, indem der Trommelkörper 4 mit seinem offenen ersten Endabschnitt 4c auf den Lagerflansch 2 vonseiten dessen zweiten Endabschnittes 2d sozusagen aufgesteckt oder aufgeschoben ist. Somit umschließt der Trommelkörper 4 mit seiner Innenseite 4b die Außenseite 2a des Lagerflansches 2, sodass sich der Trommelkörper 4 außen um den Lagerflansch 2 herum bewegt.

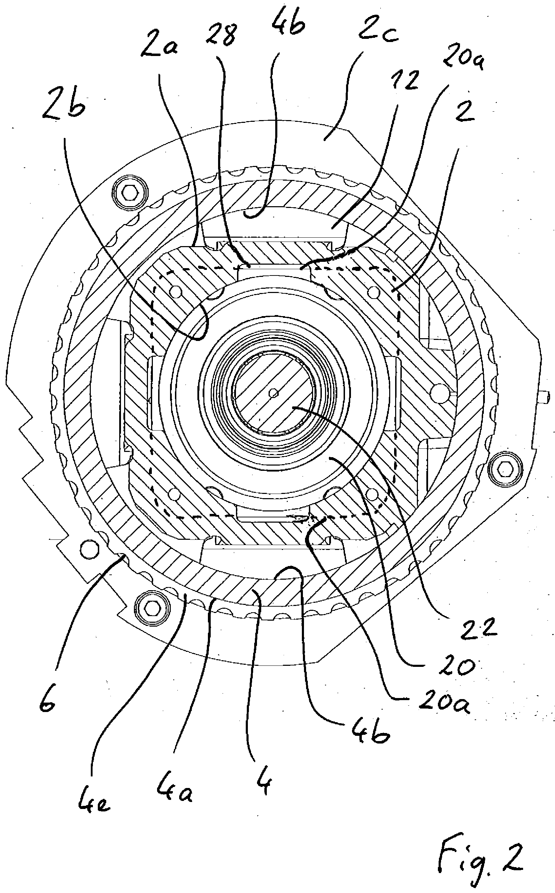

Die dargestellte Trommelanordnung kommt in Anlagen der Tabak verarbeitenden Industrie, insbesondere Zigarettenherstellungsmaschinen, zum Einsatz und wird zum Transport der stabförmigen Artikel der Tabak verarbeitenden Industrie verwendet, bei welchen es sich in Abhängigkeit vom Einsatzort innerhalb der Anlage insbesondere um Tabakstäbe, Filterstäbe oder auch bereits fertiggestellte Zigaretten mit oder ohne Filter handelt. Der Transport der stabförmigen Artikel erfolgt quer zu deren Längserstreckung bzw. Längsachse durch den Trommelkörper 4, dessen Rotationsrichtung somit der Förder- bzw. Transportrichtung entspricht. Für den Transport werden die stabförmigen Artikel von in Rotationsrichtung hintereinanderliegenden Aufnahmeabschnitten temporär aufgenommen, die an der Außenseite 4a des Trommelkörpers 4 als Mulden 6 ausgebildet sind, wie Fig. 2 erkennen lässt. Deshalb wird eine solche Trommel auch als Muldentrommel bezeichnet. Da die Mulden 6, wie Fig. 2 erkennen lässt, nutenförmig ausgebildet sind, können sie alternativ auch als Nuten und die Trommel alternativ auch als Nutentrommel bezeichnet werden. Die Mulden 6 erstrecken sich parallel zur Rotationsachse und liegen in Umfangsrichtung des Trommelkörpers 4 nebeneinander. Die Mulden können sich über die gesamte axiale Länge der Außenseite bzw. Mantelfläche des Trommelkörpers erstrecken. Im dargestellten Ausführungsbeispiel sind die Mulden 6 jedoch in drei diskreten, die Außenseite 4a des Trommelkörpers 4 ringförmig umschließenden und von dieser radial abstehenden Abschnitten 4e ausgebildet, die in axialer Richtung voneinander beabstandet sind und deren Breite in axialer Richtung jeweils nur einen Bruchteil der axialen Länge der Außenseite 4a des Trommelkörpers 4 beträgt. Somit sind in jedem der ringförmigen Abschnitte 4e sog. Muldenabschnitte ausgebildet, von denen jeweils drei in unterschiedlichen ringförmigen Abschnitten 4e ausgebildete, jedoch in axialer Richtung voneinander fluchtende Muldenabschnitte eine gemeinsame Mulde 6 bilden.

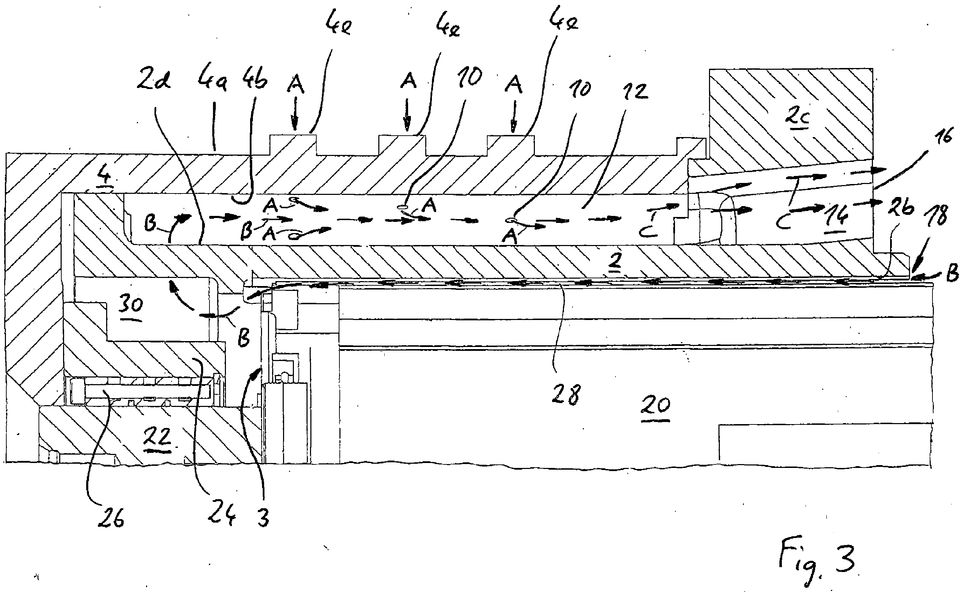

Die Fixierung der stabförmigen Artikel in den Mulden 6 geschieht mithilfe von Unterdruck, der von einer externen Saugvorrichtung erzeugt wird. Hierzu wird der von der Außenseite 4a und der Innenseite 4b begrenzte Wandabschnitt des Trommelkörpers 4 von Durchlässen 10 durchsetzt, die von den Mulden 6 in den ringförmigen Abschnitten 4e an der Außenseite 4a des Trommelkörpers 4 zur Innenseite 4b führen und dort in entsprechende Öffnungen münden. In den Figuren 1 und 3 sind diese Durchlässe 10 nur mit den erwähnten Öffnungen an der Innenseite 4b des Trommelkörpers 4 schematisch gezeigt. Wie die Figuren ferner erkennen lassen, ist der Lagerflansch 2 an seiner Außenseite 2a mit sich in axialer Richtung erstreckenden Aussparungen 12 versehen, die von der Außenseite 2a des Lagerflansches 2 einerseits und von der Innenseite 4b des den Lagerflansch 2 umschließenden Trommelkörpers 4 andererseits begrenzt werden. Da die von den Mulden 6 (Fig. 2) kommenden Durchlässe 10 in Öffnungen in der Innenseite bzw. Innenwandung 4b des Trommelkörpers 4 münden, gelangen die Mulden 6 mithilfe der Durchlässe 10 während der Rotation des Trommelkörpers 4 zumindest temporär in Fluidverbindung mit mindestens einer Aussparung 12. Die Aussparungen 12 wiederum stehen über im ersten Endabschnitt 2c des Lagerflansches 2 ausgebildete Kanäle 14 in Fluidverbindung mit einer oder mehreren Auslass- bzw. Anschlussöffnungen 16, an die bzw. denen eine in den Figuren nicht dargestellten externe Saugvorrichtung angeschlossen wird. Aufgrund der durch eine solche Saugvorrichtung erzeugten Saugwirkung bewirkt die beschriebene Fluidverbindung zwischen den Mulden 6 und der Anschlussöffnung 16 über die Durchlässe 10, die Aussparungen 12 und die Kanäle 14, dass in den Mulden 6 (Fig. 2) von den dort ausgebildeten (in den Figuren nicht dargestellten) Einlassöffnungen der Durchlässe 10 Luft angesaugt wird und dadurch ein Luftstrom von den Mulden 6 durch die Durchlässe 10 in die Aussparungen 12 entsteht, wie in Fig. 3 anhand von mit "A" gekennzeichneten Pfeilen schematisch angedeutet ist. Die in den Mulden 6 durch die Durchlässe 10 abgesaugte Luft erzeugt einen Unterdruck, wodurch die zu fördernden stabförmigen Artikel in die Mulden 6 (Fig. 2) gesogen und vom Trommelkörper 4 während dessen Rotation mitgenommen werden. Dabei sorgt der Unterdruck dafür, dass die stabförmigen Artikel in den Mulden 6 während der Rotation des Trommelkörpers 4 sicher gehalten werden.

Für den rotatorischen Antrieb des Trommelkörpers 4 wird ein Antriebsmotor vorgesehen, der am Lagerflansch 2 montiert wird. Wie bereits zuvor erörtert, ist im Lagerflansch 2 der Einbauhohlraum 3 im Bereich des ersten Endabschnittes 2c des Lagerflansches 2 nach außen hin offen, wozu in dem ersten Endabschnitt 2c des Lagerflansches 2 eine entsprechende Öffnung 18 ausgebildet ist. Im dargestellten Ausführungsbeispiel hat die Öffnung 18 im Wesentlichen den gleichen Querschnitt wie der übrige Teil des Einbauhohlraumes 3. Der Einbauhohlraum 3 dient zur Aufnahme und zum Einbau eines Antriebsmotors, der für den rotatorischen Antrieb des Trommelkörpers 4 vorgesehen und in den Figuren mit dem Bezugszeichen "20" gekennzeichnet ist. Für die Montage des Antriebsmotors 20 am Lagerflansch 2 wird dieser mit seiner Ausgangswelle 22 voran durch die Öffnung 18 in den Einbauhohlraum 3 des Lagerflansches 2 gesteckt. Im montierten Zustand wird somit der Antriebsmotor 20 im dargestellten Ausführungsbeispiel größtenteils im Einbauhohlraum 3 des Lagerflansches 2 aufgenommen, wie die Figuren 1 und 2 erkennen lassen, so dass in der Darstellung von Fig. 1 mit in den Einbauhohlraum 3 eingesetztem Antriebsmotor 20 vom Einbauhohlraum 3 nur ein kleiner freier Abschnitt benachbart zur Ausgangswelle 22 (gemäß Fig. 1 am linken Ende des Antriebsmotors 20) erkennbar ist. Gemäß der Darstellung von Fig. 1 wird im montierten Zustand der Antriebsmotor 20 derart im Einbauhohlraum 3 des Lagerflansches 2 aufgenommen, dass der in Bezug auf die Ausgangswelle 22 entfernt gelegene (gemäß Fig. 1 rechte) Endabschnitt, an dem elektrische Anschlüsse 23 vorgesehen sind, im dargestellten Ausführungsbeispiel ein wenig aus der Öffnung 18 des Einbauhohlraumes 3 herausragt und demnach mit samt den elektrischen Anschlüssen 23 zugänglich bleibt.

Dabei wird ein drehfester Eingriff der Ausgangswelle 22, die dann im Bereich des zweiten Endabschnittes 2d des Lagerflansches 2 liegt, mit dem Trommelkörper 4 hergestellt. Die Verbindung zwischen der Ausgangswelle 22 und dem Trommelkörper 4 kann bevorzugt auch noch drehsteif und somit im Wesentlichen torsionsfrei sein, was insbesondere daraus resultiert, dass weder eine Kopplung, noch eine lange Welle zum Einsatz kommt. Hierzu ist die Ausgangswelle 22 des Antriebsmotors 20 durch eine Hülse 24 geführt, die Bestandteil des zweiten Endabschnittes 2d des Lagerflansches 2 ist oder an dessen zweitem Endabschnitt 2d befestigt ist. Die Ausgangswelle 22 des Antriebsmotors 20 rotiert gegenüber der stationär angeordneten Hülse 24, wobei für eine fluiddichte Abdichtung zwischen der Ausgangswelle 22 und der Hülse 24 ein umlaufendes, ringförmiges Spann- und Dichtelement 26 vorgesehen ist. Somit begrenzt das umlaufende, ringförmige Spann- und Dichtelement 26 eine zusätzliche Öffnung 27, durch die sich im montierten Zustand die Ausgangswelle 22 des Antriebsmotors 20 erstreckt. Die Ausgangswelle 22 ist am zweiten Endabschnitt 4d des Trommelkörpers 4 mithilfe von nicht dargestellten Befestigungsmitteln drehfest befestigt. Somit wird bei Rotation der Ausgangswelle 22 des Antriebsmotors 20 der Trommelkörper 4 in entsprechende Drehbewegung versetzt und bewegt sich außen um den stationären Lagerflansch 2 herum, wobei die Rotationsachsen des Lagerflansches 2, des Trommelkörpers 4 und des Antriebsmotors 20 bzw. dessen Ausgangswelle 22 zusammenfallen. Selbstverständlich muss noch eine Drehlagereinrichtung vorgesehen sein, durch die der Trommelkörper 4 am Lagerflansch 2 drehbar gelagert ist; eine solche Lagereinrichtung ist bevorzugt Bestandteil des Antriebsmotors 20, aber aus Gründen der Übersichtlichkeit in den Figuren nicht dargestellt.

Wie Fig. 2 in Verbindung mit Fig. 1 erkennen lässt, sind das Gehäuse des Antriebsmotors 20 und die Form des den Antriebsmotor 20 aufnehmenden Einbauhohlraumes 3 im Lagerflansch 2 im Wesentlichen aufeinander abgestimmt. Dabei ist in Fig. 2 die Querschnittskontur der Außenseite 20a des Antriebsmotors 20 teilweise in durchgezogenen und teilweise in gestrichelten Linien schematisch dargestellt.

Allerdings ist zwischen der Innenwandung 2b des Lagerflansches 2 und der Außenseite 20a des Antriebsmotors 20 ein Zwischenraum 28 gebildet, der über die Öffnung 18 im ersten Endabschnitt 2c des Lagerflansches 2 mit der Umgebung kommuniziert und somit nach außen offen ist. Der im Wesentlichen spaltoder schlitzförmig ausgebildete Zwischenraum 28 erstreckt sich in axialer Richtung über die gesamte Länge des Hohlraumes und kommuniziert über einen im zweiten Endabschnitt 2d des Lagerflansches 2 ausgebildeten Verbindungshohlraum 30 mit den Aussparungen 12 an der Außenseite 2a des Lagerflansches 2. Der erwähnte Zwischenraum 28 zwischen der Innenwandung 2b des Lagerflansches 2 und der Außenseite 20a des Antriebsmotors 20 wird zur Belüftung des Antriebsmotors 20 genutzt, indem durch die Öffnung 18 ein zweiter Luftstrom, der in Fig. 3 durch mit "B" gekennzeichnete Pfeile schematisch angedeutet ist, in den Zwischenraum 28 eintritt, durch den Zwischenraum 28 entlang der Außenseite 20a des Antriebsmotors 20 in axialer Richtung fließt und dabei den Antriebsmotor 20 an seiner Außenseite 20a kühlt. Im Bereich des zweiten Endabschnittes 2d des Lagerflansches 2 tritt dann dieser zweite Luftstrom aus dem Zwischenraum 28 aus und gelangt durch den Verbindungshohlraum 30 in die Aussparungen 12, wo er sich mit den mit den Pfeilen "A" gekennzeichneten ersten Luftströmen zu einem gemeinsamen Luftstrom vereinigt, der in Fig. 3 durch mit "C" gekennzeichnete Pfeile schematisch angedeutet ist, wobei dieser gemeinsame Luftstrom von einer in den Figuren nicht dargestellten externen Saugvorrichtung durch die Anschlussöffnung 16 abgesogen wird. Somit entsteht aufgrund der Wirkung einer an die Anschlussöffnung 16 angeschlossenen Saugvorrichtung nicht nur ein erster Luftstrom gemäß den Pfeilen "A" zur Erzeugung eines Unterdruckes in den Mulden 6 (Fig. 2), sondern zusätzlich auch noch ein zweiter Luftstrom gemäß den Pfeilen "B" im Zwischenraum 28 zwischen dem Antriebsmotor 20 und der Innenwandung 2b des Lagerflansches 2. Somit wird auf geschickte Weise ein in diesem Zwischenraum 28 zwangsläufig auftretendes Kriechvakuum an der Außenseite 20a des Antriebsmotors 20 zur Bildung des zuvor erwähnten zweiten Saugluftstromes gemäß den Pfeilen "B" genutzt, um die im Antriebsmotor 20 entstehende Wärme abzutransportieren und dadurch den Antriebsmotor 20 zu kühlen. Bei Bedarf kann der Zwischenraum 28 zumindest abschnittsweise durch an der Innenwandung 2b des Lagerflansches 2 ausgebildete Aussparungen vergrößert werden, wie Fig. 2 erkennen lässt. Ferner sollten insbesondere die Aussparungen 12 zwischen der Außenseite 2a des Lagerflansches 2 und der Innenseite 4b des den Lagerflansch 2 umgebenden Trommelkörpers 4 sowie der mit den Aussparungen 12 in Fluidverbindung stehende weitere Hohlraum 30 im Wesentlichen gegenüber der Umgebung abgedichtet sein, um unerwünschte Leckagen zu vermeiden, die ansonsten die beschriebenen Luftströme schwächen könnten.

Nach alledem werden mithilfe der zuvor anhand eines bevorzugten Ausführungsbeispiels beschriebenen Anordnung ein durch die Durchlässe 10 im Trommelkörper 4 geleiteter erster Saugluftstrom gemäß den Pfeilen "A" zur Erzeugung eines Unterdruckes in den Mulden 6 (Fig. 2) und ein zweiter Saugluftstrom gemäß den Pfeilen "B" zur Kühlung des Antriebsmotors 20 zu einem gemeinsamen Saugluftstrom gemäß den Pfeilen "C" vereint, der entlang den Aussparungen 12 von einer an der Anschlussöffnung 16 angeschlossenen externen Saugvorrichtung abgeführt bzw. abgezogen wird. Dabei kann im günstigsten Fall der zur Erzeugung eines Unterdruckes in den Mulden 6 des Trommelkörpers 4 dienende erste Saugluftstrom dazu benutzt werden, den zur Kühlung des Antriebsmotors 20 dienenden zweiten Saugluftstrom aufgrund einer Sogwirkung sozusagen mitzureißen.

## Patentansprüche

1. Rotationsfördervorrichtung zum Fördern von Artikeln der Tabak verarbeitenden Industrie, mit
einem stationären Körper (2), der an seiner Außenseite (2a) mit mindestens einer mit Unterdruck beaufschlagbaren und an eine Saugvorrichtung anschließbaren Aussparung (12) versehen ist,
einem am stationären Körper (2) um eine Rotationsachse drehbar gelagerten Trommelkörper (4), der mit seiner Innenseite (4b) die Außenseite (2a) des stationären Körpers (2) umgibt und an seiner Außenseite (4a) mit mehreren in Rotationsrichtung hintereinanderliegenden Aufnahmeabschnitten (6) zur temporären Aufnahme der Artikel versehen ist, wobei der Trommelkörper (4) von seiner Außenseite (4a) durch die Aufnahmeabschnitte (6) zu seiner Innenseite (4b) führende Durchlässe (10) aufweist, die während der Rotation des Trommelkörpers (4) zumindest temporär in Fluidverbindung mit der mindestens einen Aussparung (12) an der Außenseite (2a) des stationären Körpers (2) bringbar sind, und
einem Antriebsmotor (20), dessen Rotor mit dem Trommelkörper (4) für dessen rotatorischen Antrieb drehfest und/oder drehsteif gekoppelt ist, wobei zur Belüftung des Antriebsmotors (20) Lüftungsmittel (28) vorgesehen sind, die sich in Fluidverbindung mit der mindestens einen Aussparung (12) an der Außenseite (2a) des stationären Körpers (2) befinden,
wobei der stationäre Körper (2) zur Befestigung des Antriebsmotors (20) vorgesehen ist und einen Einbauhohlraum (3) zur zumindest teilweisen Aufnahme des Antriebsmotors (20) enthält,
wobei der Einbauhohlraum (3) von einem Endabschnitt (2d) des stationären Körpers (2) begrenzt wirdund wobei zwischen der Innenwandung (2b) des Einbauhohlraumes (3) und der Außenwandung (20a) des Antriebsmotors (20) ein Zwischenraum (28) vorhanden ist, der zumindest einen Teil der Lüftungsmittel bildet,
**dadurch gekennzeichnet, dass** der Zwischenraum (28) sich in axialer Richtung über die gesamte Länge des Einbauhohlraumes (3) erstreckt und über einen im Endabschnitt (2d) des stationären Körpers (2) ausgebildeten Verbindungshohlraum (30) mit der mindestens einen Aussparung (12) an der Außenseite (2a) des stationären Körpers (2) kommuniziert.

2. Vorrichtung nach Anspruch 1, **dadurch gekennzeichnet, dass** die Lüftungsmittel mindestens einen im stationären Körper (2) ausgebildeten Durchlass (30) aufweisen, der den Einbauhohlraum (3) mit der mindestens einen Aussparung (12) an der Außenseite (2a) des stationären Körpers (2) verbindet.

3. Vorrichtung nach Anspruch 1 oder 2, **dadurch gekennzeichnet, dass** die Lüftungsmittel mindestens eine an der Innenwandung (2b) des Einbauhohlraumes (3) im stationären Körper (2) ausgebildete Aussparung (28) aufweisen, welche sich in Fluidverbindung mit der mindestens einen Aussparung (12) an der Außenseite (2a) des stationären Körpers (2) befindet.

4. Vorrichtung nach mindestens einem der vorangegangenen Ansprüche, **dadurch gekennzeichnet, dass** der Einbauholraum (3) des stationären Körpers (2) eine Öffnung (18) nach außen bzw. zur Umgebung aufweist, wobei die Öffnung (18) zum Einsetzen des Antriebsmotors (20) in den Einbauhohlraum (3) des stationären Körpers (2) ausgebildet ist.

5. Vorrichtung nach Anspruch 4, **dadurch gekennzeichnet, dass** der stationäre Körper (2) einen ersten Abschnitt (2c), in dem die Öffnung (18) des Einbauhohlraumes (3) ausgebildet ist und einen vom ersten Abschnitt (2d) entfernt gelegenen zweiten Abschnitt aufweist, in dem der Trommelkörper (4) mit dem Rotor des Antriebsmotors (20) koppelbar ist.

6. Vorrichtung nach Anspruch 5, **dadurch gekennzeichnet, dass** der erste Abschnitt (2c) den einen Endabschnitt des stationären Körpers (2) und der zweite Abschnitt (2d) das gegenüberliegende andere Ende des stationären Körpers (2) bildet.

7. Vorrichtung nach mindestens einem der vorangegangenen Ansprüche, **dadurch gekennzeichnet, dass** der stationäre Körper (2) eine mit dem Einbauhohlraum (3) kommunizierende zusätzliche Öffnung (27) zur Ausbildung einer drehfesten Kopplung zwischen der Ausgangswelle (22) des Antriebsmotors (20) und dem Trommelkörper (4) enthält.

8. Vorrichtung nach Anspruch 7, **dadurch gekennzeichnet, dass** die zusätzliche Öffnung (27) Dichtmittel (26) zur Abdichtung der drehfesten Kopplung der Ausgangswelle (22) des Antriebsmotors (20) mit dem Trommelkörper (4) aufweist.

9. Vorrichtung nach Anspruch 7 oder 8, **dadurch gekennzeichnet, dass** die zusätzliche Öffnung (27) zur Aufnahme der Ausgangswelle (22) des Antriebsmotors (20) vorgesehen ist.

10. Vorrichtung nach Anspruch 7 oder 8, **dadurch gekennzeichnet, dass** die zusätzliche Öffnung ein drehbar gelagertes Kopplungsmittel zur Herstellung einer drehfesten Kopplung zwischen der Ausgangswelle des Antriebsmotors und dem Trommelkörper enthält.

11. Vorrichtung nach mindestens einem der vorangegangenen Ansprüche, **dadurch gekennzeichnet, dass** die Lüftungsmittel mindestens ein Anschlussmittel aufweisen, das zur Herstellung einer Fluidverbindung mit einer am Antriebsmotor vorgesehenen Entlüftungsöffnung ausgebildet ist.

12. Vorrichtung nach mindestens einem der vorangegangenen Ansprüche, bei welcher die Aufnahmeabschnitte an der Außenseite (4a) des Trommelkörpers (4) als sich parallel zur Rotationsachse erstreckende Nuten oder Mulden (6) ausgebildet sind.

## Claims

1. Rotating conveyor device for conveying articles in the tobacco processing industry, having
a stationary body (2) provided with at least one recess (12) in its external face (2a) to which a negative pressure can be applied and which can be connected to a suction device,
a drum body (4) mounted on the stationary body (2) so as to be rotatable about an axis of rotation which surrounds the external face (2a) of the stationary body (2) by means of its internal face (4b) and is provided with several receiving sections (6) disposed one after the other in the direction of rotation on its external face (4a) for temporarily accommodating the articles, and the drum body (4) has passages (10) running through the receiving sections (6) from its external face (4a) to its internal face (4b) which can be fluidically connected whilst the drum body (4) is rotating, at least temporarily, to the at least one recess (12) in the external face (2a) of the stationary body (2), and
a drive motor (20), the rotor of which is coupled with the drum body (4) in a rotationally fixed and/or rotationally rigid arrangement in order to drive it in rotation,
and in order to vent the drive motor (20), venting means (28) are provided which are fluidically connected to the at least one recess (12) in the external face (2a) of the stationary body (2),
and the stationary body (2) is provided as a means of mounting the drive motor (20) and contains a mounting cavity (3) for at least partially accommodating the drive motor (20),
and the mounting cavity (3) is bounded by an end portion (2d) of the stationary body (2), and an intermediate gap (28) is provided between the internal wall (2b) of the mounting cavity (3) and the external wall (20a) of the drive motor (20) which forms at least a part of the venting means,
**characterised in that** the intermediate gap (28) extends across the entire length of the mounting cavity (3) in the axial direction and communicates with the at least one recess (12) in the external face (2a) of the stationary body (2) via a connecting cavity (30) disposed in the end portion (2d) of the stationary body (2).

2. Device as claimed in claim 1, **characterised in that** the venting means comprise at least one passage (30) disposed in the stationary body (2) which connects the mounting cavity (3) to the at least one recess (12) in the external face (2a) of the stationary body (2).

3. Device as claimed in claim 1 or 2, **characterised in that** the venting means comprise at least one recess (28) disposed in the internal wall (2b) of the mounting cavity (3) in the stationary body (2) which is fluidically connected to the at least one recess (12) in the external face (2a) of the stationary body (2).

4. Device as claimed in at least one of the preceding claims, **characterised in that** the mounting cavity (3) of the stationary body (2) has an opening (18) to the outside or to the ambient environment and the opening (18) is provided as a means of inserting the drive motor (20) in the mounting cavity (3) of the stationary body (2).

5. Device as claimed in claim 4, **characterised in that** the stationary body (2) comprises a first portion (2c) in which the opening (18) of the mounting cavity (3) is disposed and a second portion disposed at a distance apart from the first portion (2d) in which the drum body (4) can be coupled with the rotor of the drive motor (20).

6. Device as claimed in claim 5, **characterised in that** the first portion (2c) forms one end portion of the stationary body (2) and the second portion (2d) forms the other, oppositely lying end of the stationary body (2).

7. Device as claimed in at least one of the preceding claims, **characterised in that** the stationary body (2) contains an additional opening (27) communicating with the mounting cavity (3) for providing a rotationally fixed coupling between the output shaft (22) of the drive motor (20) and the drum body (4).

8. Device as claimed in claim 7, **characterised in that** the additional opening (27) has sealing means (26) for sealing the rotationally fixed coupling of the output shaft (22) of the drive motor (20) with the drum body (4).

9. Device as claimed in claim 7 or 8, **characterised in that** the additional opening (27) is provided as a means of accommodating the output shaft (22) of the drive motor (20).

10. Device as claimed in claim 7 or 8, **characterised in that** the additional opening contains a rotatably mounted coupling means for establishing a rotationally fixed coupling between the output shaft of the drive motor and the drum body.

11. Device as claimed in at least one of the preceding claims, **characterised in that** the venting means have at least one connector means provided as a means of establishing a fluid connection to a venting orifice provided on the drive motor.

12. Device as claimed in at least one of the preceding claims, wherein the receiving sections on the external face (4a) of the drum body (4) are provided in the form of grooves or depressions (6) extending parallel with the axis of rotation.

## Revendications

1. Dispositif de transport rotatif pour le transport d'articles de l'industrie de traitement du tabac, avec
un corps stationnaire (2) qui est pourvu sur sa face extérieure (2a) d'au moins un évidement (12) conçu pour être soumis à une dépression et pour être raccordé à un dispositif d'aspiration,
un corps de tambour (4) monté tournant autour d'un axe de rotation sur le corps stationnaire (2), qui entoure avec sa face intérieure (4b) la face extérieure (2a) du corps stationnaire (2) et qui est pourvu sur sa face extérieure (4a) de plusieurs sections de réception (6) disposées les unes derrière les autres dans le sens de la rotation, pour une réception temporaire des articles, le corps de tambour (4) comprenant des passages (10) allant de sa face extérieure (4a) à travers les sections de réception (6) à sa face intérieure (4b), qui sont conçus pour pouvoir être mis en liaison fluidique, au moins temporairement pendant la rotation du corps de tambour (4), avec ledit au moins un évidement (12) sur la face extérieure (2a) du corps stationnaire (2) et
un moteur d'entraînement (20) dont le rotor est accouplé au corps de tambour (4) de façon fixe en rotation et/ou rigide en rotation pour l'entraînement en rotation de celui-ci,
des moyens de ventilation (28) étant prévus pour la ventilation du moteur d'entraînement (20), qui sont en liaison fluidique avec ledit au moins un évidement (12) sur la face extérieure (2a) du corps stationnaire (2),
le corps stationnaire (2) étant prévu pour la fixation du moteur d'entraînement (20) et comprenant une cavité de montage (3) destinée à recevoir au moins partiellement le moteur d'entraînement (20),
la cavité de montage (3) étant délimité par une section d'extrémité (2d) du corps stationnaire (2) et un espace intermédiaire existant entre la paroi intérieure (2b) de la cavité de montage (3) et la paroi extérieure (20a) du moteur d'entraînement (20), qui forme au moins une partie des moyens de ventilation,
**caractérisé en ce que** l'espace intermédiaire (28) s'étend en direction axiale sur la longueur totale de la cavité de montage (3) et communique, via une cavité de liaison (30) formée dans la section d'extrémité (2d) du corps stationnaire (2), avec ledit au moins un évidement (12) sur la face extérieure (2a) du corps stationnaire (2).

2. Dispositif selon la revendication 1, **caractérisé en ce que** les moyens de ventilation comprennent au moins un passage (30) formé dans le corps stationnaire (2), qui relie la cavité de montage (3) audit au moins un évidement (12) sur la face extérieure (2a) du corps stationnaire (2).

3. Dispositif selon la revendication 1 ou 2, **caractérisé en ce que** les moyens de ventilation comprennent au moins un évidement (28) formé sur la face intérieure (2b) de la cavité de montage (3) dans le corps stationnaire (2), lequel est en liaison fluidique avec ledit au moins un évidement (12) sur la face extérieure (2a) du corps stationnaire (2).

4. Dispositif selon au moins une des revendications précédentes, **caractérisé en ce que** la cavité de montage (3) du corps stationnaire (2) comprend une ouverture (18) vers l'extérieur ou vers l'environnement, l'ouverture (18) étant formée pour l'insertion du moteur d'entraînement (20) dans la cavité de montage (3) du corps stationnaire (2).

5. Dispositif selon la revendication 4, **caractérisé en ce que** le corps stationnaire (2) comprend une première section (2c) dans laquelle est formée l'ouverture (18) de la cavité de montage (3), et une deuxième section éloignée de la première section (2d) dans laquelle le corps de tambour (4) peut être accouplé au rotor du moteur d'entraînement (20).

6. Dispositif selon la revendication 5, **caractérisé en ce que** la première section (2c) constitue une section d'extrémité du corps stationnaire (2) et que la deuxième section (2d) constitue l'autre extrémité, disposée à l'opposée, du corps stationnaire (2).

7. Dispositif selon au moins une des revendications précédentes, **caractérisé en ce que** le corps stationnaire (2) comprend une ouverture supplémentaire (27) communiquant avec la cavité de montage (3), pour la formation d'un accouplement fixe en rotation entre l'arbre de sortie (22) du moteur d'entraînement (20) et le corps de tambour (4).

8. Dispositif selon la revendication 7, **caractérisé en ce que** l'ouverture supplémentaire (27) comprend des moyens d'étanchéité (26) pour rendre étanche l'accouplement fixe en rotation de l'arbre de sortie (22) du moteur d'entraînement (20) au corps de tambour (4).

9. Dispositif selon la revendication 7 ou 8, **caractérisé en ce que** l'ouverture supplémentaire (27) est prévue pour recevoir l'arbre de sortie (22) du moteur d'entraînement (20).

10. Dispositif selon la revendication 7 ou 8, **caractérisé en ce que** l'ouverture supplémentaire contient un moyen d'accouplement monté en rotation pour la réalisation d'un accouplement fixe en rotation entre l'arbre de sortie du moteur d'entraînement et le corps de tambour.

11. Dispositif selon au moins une des revendications précédentes, **caractérisé en ce que** les moyens de ventilation comprennent au moins un moyen de raccordement qui est conçu pour la réalisation d'une liaison fluidique avec une ouverture d'évent prévue sur le moteur d'entraînement.

12. Dispositif selon au moins une des revendications précédentes, sur lequel les sections de réception sur la face extérieure (4a) du corps de tambour (4) sont formées comme des rainures ou enfoncements (6) s'étendant parallèlement à l'axe de rotation.
